# FASCICULE DE BREVET EUROPEEN

(11) **EP 2 179 787 B1**
(45) Date de publication et mention de la délivrance du brevet: **17.12.2014**
(21) Numéro de dépôt: 08018611.7
(22) Date de dépôt: 24.10.2008
(51) Int. Cl.: B01J 19/00, B01J 19/18, F16J 15/00, B01F 7/18, B01F 15/00

(54) **Appareillage à cuve d'agitation**
Gerät mit Rührbottich
Device with mixing vessel

(43) Date de publication de la demande: 28.04.2010
(73) Titulaire: BIAZZI SA, 1807 Blonay (CH)
(72) Inventeur: Hayoz, Bernard, 1804 Corsier (CH); Egloff, Serge, 1800 Vevey (CH); Mühlemann, Moritz, 1820 Territet (CH)
(74) Mandataire: Micheli & Cie SA

(56) Documents cités:
- EP-A- 0 264 905
- EP-A- 0 633 060
- DE-A1- 3 030 405
- FR-A- 2 227 899

## Description

La présente invention concerne le domaine des appareillages à cuve d'agitation.

Un tel appareillage peut être un réacteur chimique comportant une cuve d'agitation dans laquelle se déroulent des réactions chimiques, tel qu'un réacteur sous pression ou un réacteur sous vide ou un réacteur à pression ambiante.

En particulier il peut s'agir d'un réacteur gaz-liquide, du type utilisé pour la mise en oeuvre de réactions chimiques telles que l'hydrogénation, l'oxygénation, la carbonylation, l'oxydation, la chloruration, la phosgénation, etc. En chimie, les procédés qui font intervenir des réactions gaz-liquide sont extrêmement nombreux. Pour assurer le contact entre un liquide et un gaz réactif, une solution habituellement utilisée consiste à introduire le gaz réactif dans une cuve d'agitation contenant le liquide. Une agitation du liquide a pour effet de disperser le gaz sous forme de bulles. D'une manière générale, il est recherché que la taille de ces bulles de gaz soit la plus petite possible afin d'augmenter la surface de transfert entre le gaz et le liquide.

Un appareillage à cuve d'agitation peut également être un appareillage doté d'une cuve d'agitation dans laquelle ne se déroule aucune réaction chimique, comme par exemple un réservoir de préparation ayant une cuve d'agitation dans laquelle sont préparés des produits ou des mélanges de produits avant d'être mis en présence dans un réacteur, ou encore un réservoir intermédiaire ayant une cuve d'agitation dans laquelle sont stockés des produits pendant une certaine durée.

De manière classique, l'appareillage est doté d'une cuve d'agitation, et un agitateur est disposé à une extrémité inférieure d'un arbre tournant s'étendant verticalement à l'intérieur de ladite cuve d'agitation. L'arbre tournant est guidé par un palier et entraîné en rotation par un dispositif d'entraînement, disposé à l'extérieur de la cuve d'agitation dans un environnement dit « environnement d'entraînement ». La cuve d'agitation définit quant à elle un « environnement de produits ».

Les dispositifs d'étanchéité usuellement utilisés sont généralement du type garniture double ou garniture triple. Leur présence suffit à empêcher toute remontée de gaz ou de vapeur ou d'autres fluides depuis la cuve d'agitation lors du fonctionnement normal de l'appareillage à cuve d'agitation. Cependant, ces dispositifs d'étanchéité ne sont pas suffisants en cas de rupture accidentelle de l'environnement d'entraînement. Une telle rupture accidentelle peut avoir plusieurs causes. Lorsque la cuve d'agitation est un récipient sous pression, une surpression ou une fatigue du matériau peut provoquer une rupture d'une pièce de l'environnement d'entraînement et laisser s'échapper des fluides ou des particules de toute sorte depuis la cuve d'agitation vers l'environnement situé au-dessus de ladite cuve d'agitation. Lorsque la cuve d'agitation est utilisée pour mélanger des fluides et/ou des particules à pression ambiante, un événement soudain et inattendu de nature chimique ou physique peut générer une augmentation de pression dans la cuve d'agitation. Par suite, les pièces constitutives de l'environnement d'entraînement sont soumises à des conditions dépassant celles pour lesquelles elles ont été conçues et sont amenées à se rompre. Ou encore, lorsque l'environnement d'entraînement est soumis à une température excessive causée par un événement anormal, la chaleur induite peut conduire à une baisse de la résistance des pièces constitutives de l'environnement d'entraînement, et rendre celles-ci inaptes à résister aux charges pour lesquelles elles ont été conçues.

Un but de la présente invention est de proposer un dispositif de sécurité qui s'oppose à une remontée de fluides ou de particules de toute nature, depuis l'environnement de produits vers l'environnement d'entraînement en cas de rupture accidentelle de l'environnement d'entraînement.

L'invention se rapporte à un appareillage à cuve d'agitation du type comportant une cuve d'agitation destinée à contenir un liquide et un agitateur destiné à tourner axialement dans ladite cuve d'agitation, la rotation dudit agitateur étant mise en oeuvre par un environnement d'entraînement comportant un arbre tournant guidé par des roulements, dans lequel l'arbre est entouré par un espace annulaire, ledit espace annulaire ayant une portion inférieure disposée au-dessous des roulements et dont la section est supérieure à la section du reste de l'espace annulaire, ledit espace annulaire servant de passage entre l'espace d'entraînement et la cuve d'agitation.

L'appareillage à cuve d'agitation comporte un dispositif de sécurité destiné à s'opposer à une remontée à travers l'espace annulaire de produits, tels que des fluides ou des particules, depuis la cuve d'agitation vers l'environnement d'entraînement en cas de dysfonctionnement de celui-ci, ledit dispositif de sécurité étant disposé autour de l'arbre tournant dans ladite portion inférieure et comportant un clapet mobile apte à se déplacer axialement vers le haut, entre une configuration dite « ouverte » dans laquelle l'espace annulaire est ouvert et une configuration dite « fermée » dans laquelle ladite portion inférieure et donc ledit espace annulaire sont obturés.

Des formes d'exécution particulières de l'appareillage à cuve d'agitation selon l'invention sont définies dans les revendications dépendantes 2 à 9.

L'invention sera mieux comprise à la lecture de la description détaillée qui va suivre, d'un mode de réalisation particulier du dispositif de sécurité et de l'appareillage à cuve d'agitation le comportant, fourni à titre illustratif et nullement limitatif, en référence aux dessins annexés, dans lesquels :
- la figure 1 est une vue en coupe longitudinale représentant, de manière très schématique, un appareillage à cuve d'agitation et son dispositif de sécurité ;
- la figure 2 est une vue en coupe longitudinale représentant, de manière schématique et à plus grande échelle, le fonctionnement du dispositif de sécurité, qui apparaît en configuration dite « ouverte » sur la partie gauche de la figure, et en configuration dite « fermée » sur la partie droite de la figure ;
- la figure 3 est une vue de dessous du dispositif de sécurité ;
- les figures 4 et 5 sont des vues en coupe transversale du dispositif de sécurité, respectivement en configuration dite « ouverte » et en configuration dite « fermée » ;
- la figure 6 est analogue à la figure 3 pour une variante de réalisation.

Le mode de réalisation de l'appareillage à cuve d'agitation qui est illustré aux figures est un réacteur chimique, pour lequel la cuve d'agitation constitue une chambre de confinement.

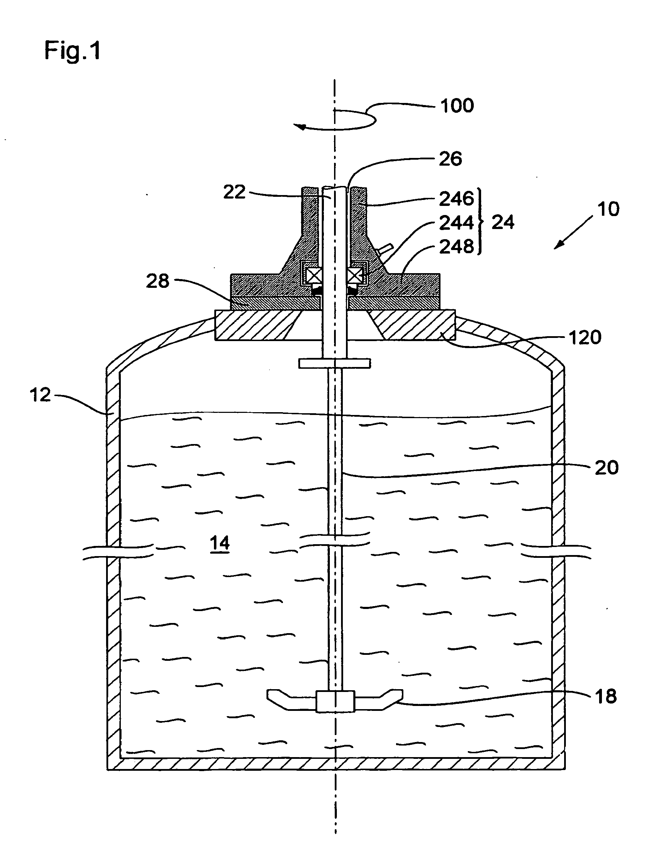

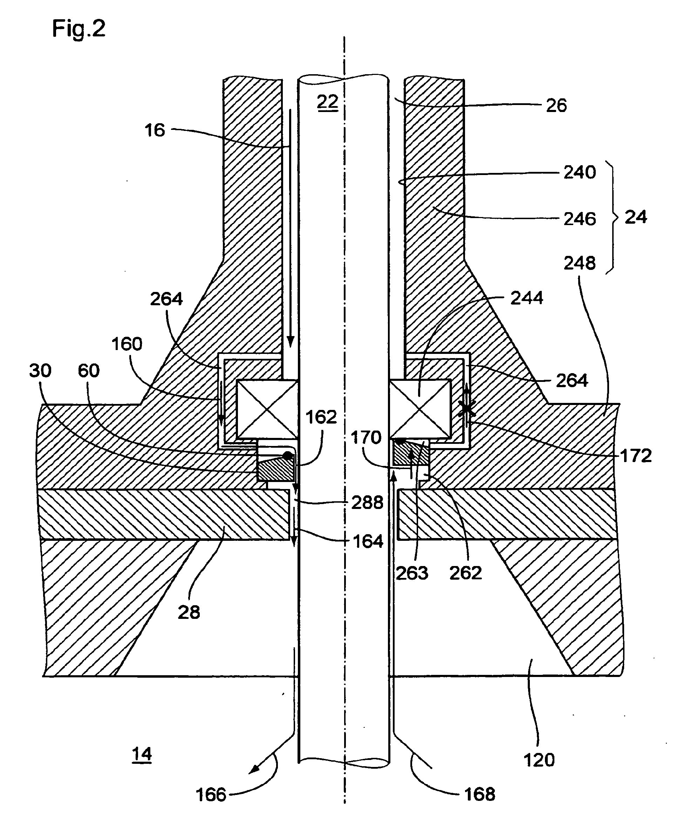

En se référant tout d'abord aux figures 1 et 2, il est représenté de manière très schématique un réacteur chimique 10 ayant une cuve d'agitation 12 remplie d'un liquide 14. Un agitateur 18, agencé à l'extrémité d'une tige 20 disposée verticalement dans la cuve d'agitation 12, est entraîné en rotation axiale, comme indiqué par la flèche 100, et entretient l'agitation du liquide 14. A l'extérieur de la cuve d'agitation 12, la tige 20 est portée par un arbre 22 qui lui est coaxial et qui tourne dans un palier 24 sous l'action d'un organe d'entraînement, par exemple un moteur d'entraînement ou un dispositif d'entraînement magnétique (non représenté). Le palier 24 autorise une rotation axiale de l'arbre 22 et absorbe les forces axiales et radiales s'exerçant sur celui-ci. Il comporte un corps de palier 246, sensiblement cylindrique, portant un roulement supérieur, non représenté, et un roulement inférieur 244. Le corps de palier 246 se prolonge vers le bas par un flasque de palier 248 s'étendant suivant un plan sensiblement perpendiculaire à la direction de l'arbre 22.

Comme le montre la figure 2, la face intérieure du palier 24 constitue la paroi d'un logement cylindrique 240 pour l'arbre 22. Entre cette face intérieure et l'arbre 22 se trouve un espace annulaire 26.

Sur l'exemple illustré, cet espace annulaire 26 sert de passage d'alimentation pour un gaz, réactif ou un gaz inerte ou un mélange des deux, qui circule du haut vers le bas, comme indiqué par la flèche 16, avant d'être acheminé dans la cuve d'agitation 12. Mais cette introduction de gaz représentée par la flèche 16 n'est pas prévue dans tous les appareillages à cuve d'agitation et ne participe pas au fonctionnement du dispositif de sécurité selon l'invention.

Une pièce de guidage 28 est disposée sous le palier 24. Elle est fixée de manière étanche au flasque de palier 248, par des moyens de fixation classiques, non représentés, comportant, par exemple, des vis et un joint torique. La pièce de guidage 28 entoure l'arbre 22, ces deux pièces 28, 22 définissant entre elles un espace cylindrique annulaire 288 plus étroit que l'espace cylindrique annulaire 26 défini entre le même arbre tournant 22 et le corps de palier 246. L'extrémité inférieure de la pièce de guidage 28 débouche dans la cuve d'agitation 12. Une pièce de liaison annulaire 120 reliée de manière étanche à la paroi de la cuve d'agitation 12 sert de support à la pièce de guidage 28.

Comme illustré sur la figure 2, le roulement inférieur 244 est disposé à proximité de l'extrémité inférieure du palier 24. La portion du logement 240 qui se trouve au-dessous du roulement 244 présente une section supérieure à celle de la portion du logement 240 qui se trouve au-dessus du roulement 244. Par suite, la portion 262 de l'espace annulaire 26 qui se trouve au-dessous du roulement 244 a aussi une section supérieure à celle de sa portion qui se trouve au-dessus du roulement 244. Des canaux de dérivation 264 sont ménagés dans le corps de palier 246 et contournent le roulement inférieur 244, de manière à relier la portion de l'espace annulaire 26 située au-dessus du roulement 244 à la portion 262 de l'espace annulaire 26 qui se trouve au-dessous du roulement 244.

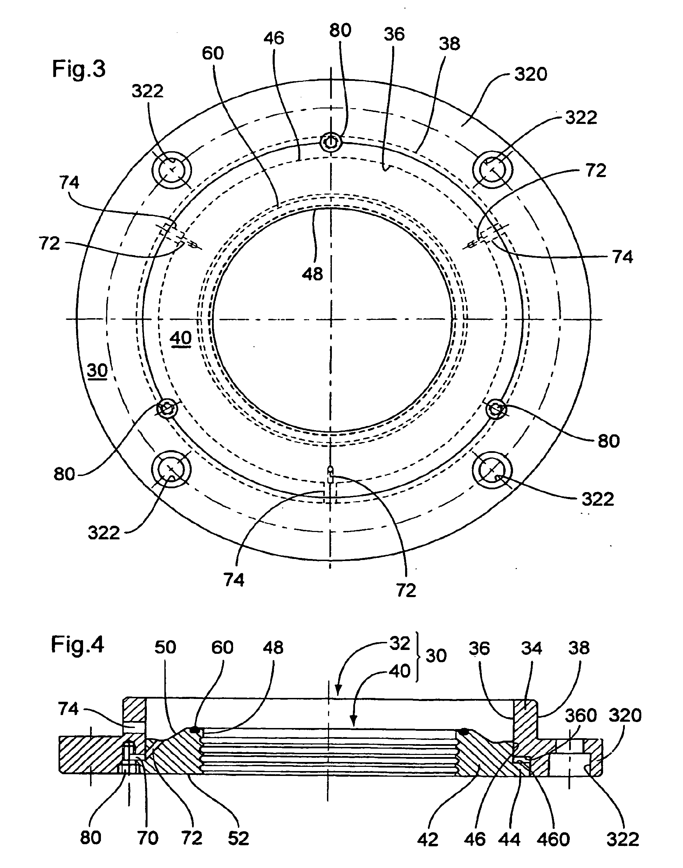

Le dispositif de sécurité est désigné dans son ensemble par le repère 30. Il est disposé dans la portion inférieure 262 de l'espace annulaire 26. Sa structure va être décrite plus en détail en référence aux figures 3 et 4. Il comporte un anneau 32 et un clapet mobile 40 apte à coulisser à l'intérieur de l'anneau 32.

L'anneau 32 possède un corps 34 et une bride latérale de fixation 320 qui s'étend radialement vers l'extérieur à partir du corps 34. Le corps 34 possède une face intérieure 36 et une face extérieure 38. A sa partie inférieure, le corps 34 présente un décrochement qui définit sur la face intérieure 36 un épaulement 360 orienté vers le bas et vers l'extérieur. La bride latérale de fixation 320 comporte des moyens de fixation 322 pour la fixation de l'anneau 32 dans le flasque de palier 248. Sur l'exemple illustré, les moyens de fixation 322 sont des trous, au nombre de quatre, destinés à coopérer avec des vis de fixation.

Le clapet mobile 40 possède un corps 42 et une collerette latérale 44 qui s'étend radialement vers l'extérieur à partir du corps 42. Le corps 42 possède une face extérieure 46, une ouverture centrale 48, une face supérieure 50 et une face inférieure 52. La face extérieure 46 comporte un épaulement 460 orienté vers le haut. Un joint torique 60 est disposé sur la face supérieure 50, dans une rainure entourant l'ouverture centrale 48.

L'anneau 32 et le clapet 40 sont dimensionnés de telle manière que, lorsqu'ils sont assemblés, la face extérieure 46 du clapet 40 soit en contact glissant avec la face intérieure 36 de l'anneau 32 et que l'épaulement 360 de la face intérieure 36 de l'anneau 32 soit en regard de l'épaulement 460 de la face extérieure 46 du clapet 40.

Les deux épaulements en regard 360, 460 sont séparés par un espace intermédiaire 70 qui présente une forme annulaire, et qui est de préférence rempli de graisse ou de tout autre produit ayant des propriétés, telles que la viscosité, la résistance à la corrosion, la stabilité chimique ou l'inertie, qui soient similaires. Des canaux 72, 74 sont prévus, respectivement à travers le corps 42 du clapet 40 et à travers le corps 34 de l'anneau 32. Les canaux 72 s'étendent suivant une direction oblique. Ils relient la face supérieure 50 du clapet 40 à sa face extérieure 46, au-dessus de la collerette 44, et débouchent dans l'espace intermédiaire 70. Les canaux 74 s'étendent suivant une direction sensiblement radiale. Ils relient la face extérieure 38 de l'anneau 32, au-dessus de la bride latérale 320, à sa face intérieure 36. Ils constituent des prolongements des canaux de dérivation 264 du palier 24, qui contournent le roulement 244.

L'anneau 32 et le clapet 40 sont assemblés par des vis de fixation 80, introduites par la face inférieure 52 du clapet 40, qui traversent la collerette 44, puis l'espace intermédiaire 70, puis s'ancrent dans le corps 34 de l'anneau 32.

Les dimensions et l'assemblage de l'anneau 32 et du clapet 40 autorisent un mouvement de coulissement axial du clapet 40 à l'intérieur de l'anneau 32, la course de ce mouvement de coulissement étant égale à la hauteur de l'espace intermédiaire 70.

Afin d'améliorer le glissement de la face extérieure 46 du clapet 40 sur la face intérieure 36 de l'anneau 32, l'une au moins de ces faces peut avoir subi un traitement approprié. Par exemple, elle peut être recouverte d'un revêtement facilitant le glissement, tel que par exemple du polyéthylène haute densité, ou elle peut avoir subi un traitement thermique. Ainsi, le risque de grippage des pièces en contact peut être réduit, voire supprimé.

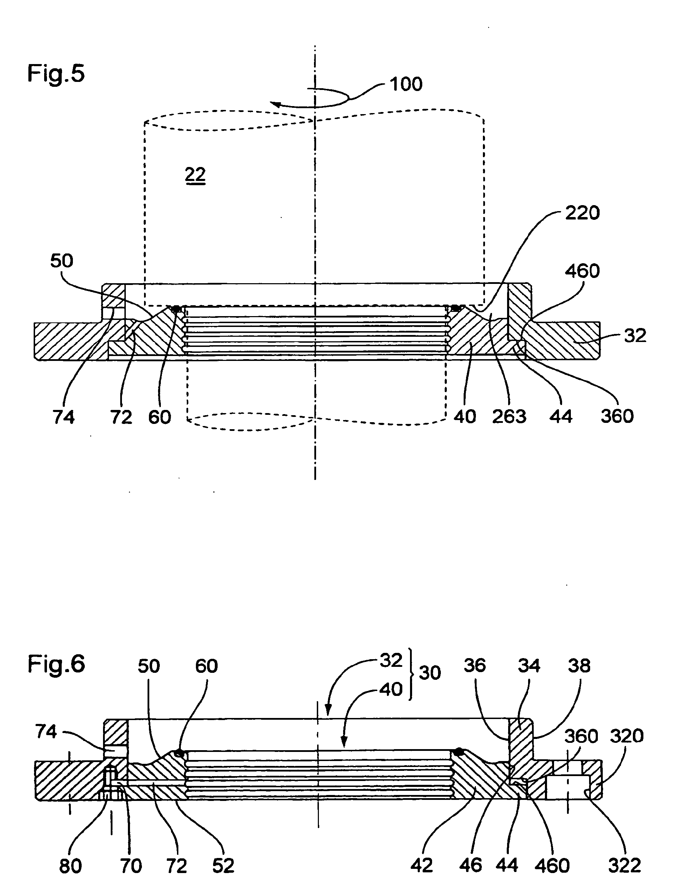

On va maintenant décrire le fonctionnement du dispositif de sécurité 30, illustré de manière très schématique à la figure 2, et de manière plus précise aux figures 4 et 5. Sur la figure 5, l'arbre 22 est représenté en traits discontinus. Il présente, au niveau du dispositif de sécurité 30, un changement de diamètre qui crée un épaulement 220 orienté vers le bas qui sert de butée au clapet 40 lors de son déplacement. Dans une autre configuration possible, non représentée, l'arbre 22 ne présente pas d'épaulement 220, mais le palier 24 est équipé d'une ou plusieurs pièces remplissant une fonction équivalente de butée pour le clapet 40 lors de son déplacement.

La partie gauche de la figure 2 illustre schématiquement le fonctionnement normal du réacteur chimique 10. Le dispositif de sécurité 30 est dans sa configuration « ouverte », c'est-à-dire avec le clapet mobile 40 en position basse par rapport à l'anneau 32. Lorsque l'utilisation de l'appareillage à cuve d'agitation nécessite qu'un gaz, un gaz réactif ou un gaz inerte un mélange des deux, soit introduit dans l'espace cylindrique annulaire 26 entourant l'arbre 22, celui-ci s'écoule du haut vers le bas, comme indiqué par la flèche 16, du fait que la pression régnant dans cet espace annulaire 26 est supérieure à la pression régnant dans la cuve d'agitation 12. Au niveau du roulement inférieur 244, le gaz introduit emprunte les canaux de dérivation 264, comme indiqué par la flèche 160. Il arrive ensuite dans la portion inférieure 262 de l'espace annulaire 26, au-dessus du dispositif de sécurité 30. Il traverse le dispositif de sécurité 30 en configuration « ouverte », en passant entre l'ouverture centrale 48 du clapet 40 et l'arbre tournant 22, comme indiqué par la flèche 162. Ensuite il continue de s'écouler le long de l'arbre tournant 22, dans l'espace cylindrique annulaire 288, comme indiqué par la flèche 164, et pénètre dans la cuve d'agitation 12 où se trouve le liquide en agitation 14, comme indiqué par la flèche 166.

La partie droite de la figure 2 illustre schématiquement une situation anormale. Une surpression dans la cuve d'agitation 12 du réacteur chimique 10 a pour effet de faire remonter des gaz et/ou des vapeurs de réaction, comme indiqué par la flèche 168, de l'environnement de produits situé dans la cuve d'agitation 12 vers l'environnement d'entraînement situé au-dessus de la pièce de guidage 28. Cette surpression peut être due à différentes causes, l'une des plus graves étant une rupture accidentelle de l'environnement d'entraînement.

Par suite, lorsque les gaz de réaction et/ou vapeurs de réaction arrivent dans la portion inférieure 262 de l'espace annulaire 26, ils agissent sur le dispositif de sécurité 30, comme indiqué par la flèche 170, et provoquent le déplacement vers le haut du clapet 40. La figure 5 montre que la collerette 44 du clapet mobile 40 vient en butée contre l'épaulement 360 de l'anneau 32. L'espace intermédiaire 70 est alors supprimé. La graisse, ou autre matière aux propriétés similaires, qu'il contenait est chassée dans la portion 262 de l'espace annulaire 26 par les canaux 72. Simultanément la face supérieure 50 du clapet mobile 40 vient en butée contre une pièce située au-dessus de lui, en comprimant le joint torique 60, ce qui obture le passage entre les canaux de dérivation 264 et l'ouverture 48 du clapet 40. Sur l'exemple illustré à la figure 5, le clapet 40 vient en butée contre l'épaulement 220 de l'arbre 22. En variante, le clapet 40 pourrait venir en butée contre une face inférieure 220 d'une pièce solidaire de l'arbre 22. De manière plus schématique, la figure 2 montre le clapet 40 en butée contre le roulement 244, le joint torique 60 étant comprimé, et l'obturation du passage entre les canaux de dérivation 264 et l'ouverture 48 du clapet 40. La figure 2 montre aussi que, lorsque ce passage est obturé, les gaz de réaction ou vapeurs de réaction en provenance de la cuve d'agitation 12 ne peuvent pas remonter par les canaux de dérivation 264, comme indiqué par la flèche barrée 172. Plus particulièrement, la portion inférieure 262 de l'espace annulaire 26 est séparée, par le clapet 40, d'un volume résiduel isolé 263 dans lequel débouchent les canaux de dérivation 264.

La figure 6 illustre une variante de réalisation du dispositif de sécurité 30, dans laquelle les canaux 72 du corps 42 ne sont pas orientés suivant une direction oblique mais suivant une direction sensiblement horizontale. Ils relient l'ouverture centrale 48 du clapet 40 à sa face extérieure 46. Dans cette variante également, les canaux 72 débouchent dans l'espace intermédiaire 70. Par suite, lorsque le clapet 40 est déplacé vers le haut, la collerette 44 vient en butée contre l'épaulement 360 de l'anneau 32, ce qui supprime l'espace intermédiaire 70. La graisse, ou autre matière ayant des propriétés similaires, est chassée vers l'ouverture 48 du clapet 40, puis dans la portion inférieure 262 de l'espace annulaire 26.

Le dispositif de sécurité 30 selon l'invention présente un certain nombre d'avantages.

Le dispositif de sécurité 30 assure une étanchéité initiale vis-à-vis d'une remontée de produits non souhaités provenant de la cuve d'agitation 12 en cas de dysfonctionnement dans l'environnement d'entraînement. Puis, si l'étanchéité ne peut être maintenue du fait de la gravité des réactions non désirées dans la cuve d'agitation 12, il permet, au moins au début d'un incident, de limiter le débit des gaz de réaction ou des gaz inertes et/ou des vapeurs de réaction qui s'échappent de la cuve d'agitation 12.

Le dispositif de sécurité 30 est disposé vers le bas du palier 24, ce qui lui permet d'agir dès la sortie de la cuve d'agitation 12.

Une activation du dispositif de sécurité 30 peut être détectée par un dispositif de mesure des débits de gaz qui s'échappent de la cuve d'agitation 12, par un dispositif de détection du clapet 40 ou par toute autre instrumentation utile à cette fin.

En outre, la présence du dispositif de sécurité 30, dont la géométrie est connue, permet de déterminer aisément les paramètres nécessaires au calcul des pertes de charge.

Bien entendu, l'invention n'est pas limitée aux modes de réalisations qui ont été illustrés aux figures et couvre des variantes de réalisation à la portée de l'homme du métier.

## Revendications

1. Appareillage à cuve d'agitation (10) du type comportant une cuve d'agitation (12) destinée à contenir un liquide et un agitateur (18) destiné à tourner axialement dans ladite cuve d'agitation (12), la rotation dudit agitateur (18) étant mise en oeuvre par un environnement d'entraînement comportant un arbre tournant (22) guidé par des roulements (244), dans lequel l'arbre (22) est entouré par un espace annulaire (26), ledit espace annulaire (26) ayant une portion inférieure (262) disposée au-dessous des roulements (244) et dont la section est supérieure à la section du reste de l'espace annulaire (26), ledit espace annulaire (26) servant de passage entre l'environnement d'entraînement et la cuve d'agitation (12),
**caractérisé en ce qu'**il comporte un dispositif de sécurité (30) destiné à s'opposer à une remontée à travers l'espace annulaire 26 de produits, tels que des fluides ou des particules, depuis la cuve d'agitation (12) vers l'environnement d'entraînement en cas de dysfonctionnement de celui-ci,
ledit dispositif de sécurité (30) étant disposé autour de l'arbre tournant (22) dans ladite portion inférieure (262) et comportant un clapet mobile (40) apte à se déplacer axialement vers le haut, entre une configuration dite « ouverte » dans laquelle l'espace annulaire (26) est ouvert et une configuration dite « fermée », dans laquelle ladite portion inférieure (262) et donc ledit espace annulaire (26) sont obturés.

2. Appareillage à cuve d'agitation (10) selon la revendication 1, **caractérisé en ce que** ledit clapet mobile (40) comporte une face supérieure (50) dotée d'un joint torique (60), et **en ce que** ledit joint torique (60) est comprimé entre ladite face supérieure (50) et une face inférieure (220) de l'arbre (22) ou d'une pièce solidaire de l'arbre (22), lorsque ledit dispositif de sécurité (30) est en configuration dite « fermée ».

3. Appareillage à cuve d'agitation (10) selon la revendication 1 ou 2, **caractérisé en ce que** le clapet mobile (40) se déplace à l'infiérieur d'un anneau fixe (32), ledit clapet (40) ayant un épaulement (460) orienté vers le haut et ledit anneau (32) ayant un épaulement (360) orienté vers le bas, **en ce que** lesdits épaulements (360, 460) sont en regard l'un de l'autre et séparés par un espace intermédiaire (70) lorsque le dispositif de sécurité (30) est en configuration dite « ouverte » et **en ce que** lesdits deux épaulements (360, 460) sont en butée l'un contre l'autre lorsque ledit dispositif de sécurité (30) est en configuration dite « fermée ».

4. Appareillage à cuve d'agitation (10) selon la revendication 3, dans lequel la course du clapet mobile (40) est égale à la distance entre les deux épaulements (360, 460) lorsque le dispositif de sécurité (30) est en configuration dite « ouverte ».

5. Appareillage à cuve d'agitation (10) selon la revendication 3 ou 4, dans lequel ledit espace intermédiaire (70) est rempli de graisse.

6. Appareillage à cuve d'agitation (10) selon l'une quelconque des revendications 3 à 5, dans lequel ledit clapet (40) possède une face extérieure (46) et/ou ledit anneau (32) possède une face intérieure (36) destinées à glisser l'une contre l'autre lorsque ledit dispositif de sécurité (30) passe de l'une à l'autre de la configuration dite « fermée » à la configuration dite « ouverte », et dans lequel ladite face extérieure (46) et/ou ladite face intérieure (36) ont subi un traitement approprié pour faciliter le glissement.

7. Appareillage à cuve d'agitation (10) selon la revendication 6, dans lequel ladite face extérieure (46) du clapet et/ou ladite face intérieure (36) de l'anneau (32) sont recouvertes d'un revêtement approprié, de telle sorte que le glissement relatif de l'une contre l'autre soit facilité.

8. Appareillage à cuve d'agitation (10) selon la revendication 7, dans lequel ladite face extérieure (46) et/ou ladite face intérieure (36) sont recouvertes de polyéthylène haute densité.

9. Appareillage à cuve d'agitation (10) selon la revendication 6, dans lequel ladite face extérieure (46) du clapet et/ou ladite face intérieure (36) de l'anneau (32) ont subi un traitement thermique, de telle sorte que le glissement relatif de l'une contre l'autre soit facilité.

## Patentansprüche

1. Gerät mit Rührbottich (10) des Typs, der einen Rührbottich (12), der dazu bestimmt ist, eine Flüssigkeit zu enthalten, und einen Rührer (18) umfasst, der dazu bestimmt ist, sich axial in dem Rührbottich (12) zu drehen, wobei die Drehung des Rührers (18) durch eine Antriebsumgebung ausgeführt wird, die eine drehbare Welle (22) umfasst, die durch Lager (244) geführt wird, wobei die Welle (22) von einem ringförmigen Raum (26) umgeben ist, wobei der ringförmige Raum (26) einen unteren Abschnitt (262) aufweist, der unterhalb der Lager (244) angeordnet ist und dessen Querschnitt größer ist als der Querschnitt des Rests des ringförmigen Raums (26), wobei der ringförmige Raum (26) als Durchgang zwischen der Antriebsumgebung und dem Rührbottich (12) dient,
**dadurch gekennzeichnet, dass** es eine Sicherheitsvorrichtung (30) umfasst, die dazu bestimmt ist, einem Aufsteigen von Produkten, wie beispielsweise Fluiden oder Teilchen, von dem Rührbottich (12) durch den ringförmigen Raum (26) in Richtung der Antriebsumgebung bei einer Funktionsstörung derselben entgegenzuwirken,
wobei die Sicherheitsvorrichtung (30) um die drehbare Welle (22) herum in dem unteren Abschnitt (262) angeordnet ist und einen beweglichen Schließkörper (40) umfasst, der geeignet ist, um sich axial nach oben zwischen einer sogenannten "offenen" Ausgestaltung, in der der ringförmige Raum (26) offen ist, und einer sogenannten "geschlossenen" Ausgestaltung zu verschieben, in der der untere Abschnitt (262) und somit der ringförmige Raum (26) verschlossen sind.

2. Gerät mit Rührbottich (10) nach Anspruch 1, **dadurch gekennzeichnet, dass** der bewegliche Schließkörper (40) eine obere Seite (50) umfasst, die mit einer torischen Dichtung (60) versehen ist, und dadurch, dass die torische Dichtung (60) zwischen der oberen Seite (50) und einer unteren Seite (220) der Welle (22) oder eines fest mit der Welle (22) verbundenen Teils zusammengedrückt ist, wenn die Sicherheitsvorrichtung (30) sich in der sogenannten "geschlossenen" Ausgestaltung befindet.

3. Gerät mit Rührbottich (10) nach Anspruch 1 oder 2, **dadurch gekennzeichnet, dass** der bewegliche Schließkörper (40) sich im Inneren eines festen Rings (32) verschiebt, wobei der Schließkörper (40) eine Schulter (460) aufweist, die nach oben ausgerichtet ist und der Ring (32) eine Schulter (360) aufweist, die nach unten ausgerichtet ist, und dadurch, dass die Schultern (360, 460) einander gegenüberstehen und durch einen Zwischenraum (70) getrennt sind, wenn die Sicherheitsvorrichtung (30) sich in der sogenannten "offenen" Ausgestaltung befindet, und dadurch, dass die zwei Schultern (360, 460) gegeneinander in Anschlag sind, wenn die Sicherheitsvorrichtung (30) sich in der sogenannten "geschlossenen" Ausgestaltung befindet.

4. Gerät mit Rührbottich (10) nach Anspruch 3, wobei der Hub des beweglichen Schließkörpers (40) gleich dem Abstand zwischen den zwei Schultern (360, 460) ist, wenn die Sicherheitsvorrichtung (30) sich in der sogenannten "offenen" Ausgestaltung befindet.

5. Gerät mit Rührbottich (10) nach Anspruch 3 oder 4, wobei der Zwischenraum (70) mit Fett gefüllt ist.

6. Gerät mit Rührbottich (10) nach einem der Ansprüche 3 bis 5, wobei der Schließkörper (40) eine Außenseite (46) aufweist und/oder der Ring (32) eine Innenseite (36) aufweist, die dazu bestimmt sind, gegeneinander zu gleiten, wenn die Sicherheitsvorrichtung (30) von der einen von der sogenannten "geschlossenen" Ausgestaltung und der sogenannten "offenen" Ausgestaltung in die andere übergeht, und wobei die Außenseite (46) und/oder die Innenseite (36) einer zweckmäßigen Behandlung unterzogen wurden, um das Gleiten zu erleichtern.

7. Gerät mit Rührbottich (10) nach Anspruch 6, wobei die Außenseite (46) des Schließkörpers und/oder die Innenseite (36) des Rings (32) mit einer zweckmäßigen Beschichtung bedeckt sind, derart, dass das gegenseitige Gleiten gegeneinander erleichtert ist.

8. Gerät mit Rührbottich (10) nach Anspruch 7, wobei die Außenseite (48) und/oder die Innenseite (36) mit Polyethylen mit hoher Dichte bedeckt sind.

9. Gerät mit Rührbottich (10) nach Anspruch 6, wobei die Außenseite (46) des Schließkörpers und/oder die Innenseite (36) des Rings (32) einer Wärmebehandlung unterzogen wurden, derart, dass das gegenseitige Gleiten gegeneinander erleichtert ist.

## Claims

1. Mixing vessel apparatus (10) of the type comprising a mixing vessel (12) intended to contain a liquid and a stirrer (18) intended to rotate axially in said mixing vessel (12), the rotation of said stirrer (18) being implemented by a drive environment comprising a rotating shaft (22) guided by rollers (244), wherein the shaft (22) is surrounded by an annular space (26), said annular space (26) having a lower portion (262) disposed below the rollers (244), the cross-sectional area thereof being greater than the cross-sectional area of the remainder of the annular space (26), said annular space (26) serving as a passage between the drive environment and the mixing vessel (12),
**characterised in that** it comprises a safety device (30) intended to prevent products, such as fluids or particles, from rising up through the annular space (26) from the mixing vessel (12) to the drive environment in the event of malfunction thereof, said safety device (30) being disposed around the rotating shaft (22) in said lower portion (262) and having a movable valve (40) which is able to be displaced axially upwards between a so-called "open" configuration in which the annular space (26) is open and a so-called "closed" configuration in which said lower portion (262), and thus said annular space (26), are blocked.

2. Mixing vessel apparatus (10) as claimed in claim 1, **characterised in that** said movable valve (40) has an upper face (50) provided with an O-ring (60), and **in that** said O-ring (60) is compressed between said upper face (50) and a lower face (220) of the shaft (22) or is in one piece with the shaft (22) when said safety device (30) is in the so-called "closed" configuration.

3. Mixing vessel apparatus (10) as claimed in claim 1 or 2, **characterised in that** the movable valve (40) is displaced within a fixed ring (32), said valve (40) having a shoulder (460) facing upwards and said ring (32) having a shoulder (360) facing downwards, **in that** said shoulders (360, 460) face each other and are separated by an intermediate space (70) when the safety device (30) is in the so-called "open" configuration, and **in that** said two shoulders (360, 460) abut one another when said safety device (30) is in the so-called "closed" configuration.

4. Mixing vessel apparatus (10) as claimed in claim 3, wherein the travel of the movable valve (40) is equal to the distance between the two shoulders (360, 460) when the safety device (30) is in the so-called "open" configuration.

5. Mixing vessel apparatus (10) as claimed in claim 3 or 4, wherein said intermediate space (70) is filled with grease.

6. Mixing vessel apparatus (10) as claimed in any one of claims 3 to 5, wherein said valve (40) has an outer face (46) and/or said ring (32) has an inner face (36) which are intended to slide against one another when said safety device (30) passes from one configuration to the other, the so-called "closed" configuration to the so-called "open" configuration, and wherein said outer face (46) and/or said inner face (36) have been subjected to suitable treatment to facilitate sliding.

7. Mixing vessel apparatus (10) as claimed in claim 6, wherein said outer face (46) of the valve and/or said inner face (36) of the ring (32) are covered by a suitable coating such that the relative sliding of one against the other is facilitated.

8. Mixing vessel apparatus (10) as claimed in claim 7, wherein said outer face (46) and/or said inner face (36) are covered with high density polyethylene.

9. Mixing vessel apparatus (10) as claimed in claim 6, wherein said outer face (46) of the valve and/or said inner face (36) of the ring (32) have been subjected to thermal treatment such that the relative sliding of one against the other is facilitated.
